# FASCICULE DE BREVET EUROPEEN

(11) **EP 4 145 704 B1**
(45) Date de publication et mention de la délivrance du brevet: **07.02.2024**
(21) Numéro de dépôt: 22191050.8
(22) Date de dépôt: 18.08.2022
(51) Int. Cl.: H03K 21/38, G06F 1/26, G06F 21/57

(54) **DÉMARRAGE SÉCURISÉ D'UNE UNITÉ DE TRAITEMENT**
GESICHERTES STARTEN EINER VERARBEITUNGSEINHEIT
SECURE STARTING OF A PROCESSING UNIT

(30) Priorité: 26.08.2021 FR 2108928
(43) Date de publication de la demande: 08.03.2023
(73) Titulaire: STMicroelectronics (Grand Ouest) SAS, 72100 Le Mans (FR)
(72) Inventeur: ALBESA, Franck, 72250 Parigne L'Eveque (FR)
(74) Mandataire: Cabinet Beaumont

(56) Documents cités:
- US-A1- 2006 198 515

## Description

### Domaine technique

La présente description concerne le domaine des procédés et dispositifs pour la sécurité de circuits électroniques, et en particulier un dispositif et un procédé permettant d'effectuer un démarrage sécurisé d'un tel circuit.

### Technique antérieure

Le démarrage d'un dispositif de traitement est basé sur l'exécution de codes tels que des codes logiciels et/ou micrologiciels (en anglais "firmware"). La séquence de démarrage d'un dispositif est une étape sensible en termes de sécurité, car elle implique en général le réglage des paramètres liés à la sécurité du dispositif et/ou le traitement de données sensibles en termes de confidentialité, intégrité et authenticité telles que des clefs de chiffrement.

US 2006/198515 A1 divulgue un module cryptographique de sécurité avec compteur monotone pour contrôleur de sauvegarde de données encryptées.

Bien que des solutions existent pour rendre les codes de démarrage immuables et moins sensibles aux attaques extérieures, il serait souhaitable de protéger d'avantage l'accès à ces codes et aux données sensibles lors du démarrage d'un dispositif de traitement.

### Résumé de l'invention

Un mode de réalisation pallie tout ou partie des inconvénients des solutions existantes.

Un mode de réalisation prévoit un procédé comprenant :
- la protection d'une séquence de démarrage d'un dispositif de traitement par des incrémentations d'une valeur de comptage générée par un compteur monotone ;
- une première durée après le début de la séquence de démarrage, la comparaison, par le circuit de protection, entre la valeur de comptage et une première valeur de référence ; et
- si la valeur de comptage est inférieure à la première valeur de référence, la modification, par le circuit de protection, de la valeur de comptage en la première valeur de référence.

Selon un mode de réalisation, la valeur de comptage est stockée dans un registre du compteur monotone, la modification de la valeur de comptage en la première valeur de référence consistant en l'écrasement de la valeur de comptage par la première valeur de référence dans ledit registre.

Selon un mode de réalisation, le procédé comprend en outre la comparaison, par le circuit de protection, entre une valeur courante d'un compteur matériel cadencé par une horloge de référence avec une valeur seuil afin de déterminer si la première durée est atteinte.

Selon un mode de réalisation, le procédé comprend en outre la désactivation du circuit de protection lorsque la première durée est atteinte.

Selon un mode de réalisation, le procédé comprend :
- après une deuxième durée, la comparaison, par le circuit de protection, entre la valeur de comptage et une deuxième valeur de référence ; et
- si la valeur de comptage est inférieure à la deuxième valeur de référence, la modification, par le circuit de protection, de la valeur de comptage en la deuxième valeur de référence.

Selon un mode de réalisation, le procédé comprend en outre la génération de la valeur de comptage par le compteur monotone lors d'une première phase de la séquence de démarrage.

Selon un mode de réalisation, le procédé comprend :
- la transmission, par le compteur monotone, de la valeur de comptage à un circuit de contrôle d'accès d'une mémoire ; et
- la lecture, sur la base de la valeur de comptage, de premières données stockées dans la mémoire.

Selon un mode de réalisation, la lecture des premières données est interdite par le circuit de contrôle d'accès sur la base de la première valeur de référence.

Selon un mode de réalisation, les premières données comprennent des premiers codes de démarrage.

Selon un mode de réalisation, le procédé comprend en outre la lecture, sur la base de la valeur de comptage, de deuxièmes données stockées dans la mémoire.

Un mode de réalisation prévoit un dispositif de traitement comprenant :
- un compteur monotone configuré pour protéger une séquence de démarrage du dispositif en incrémentant une valeur de comptage ; et
- un circuit de protection configuré pour :
- une première durée après le début de la séquence de démarrage, comparer la valeur de comptage avec une première valeur de référence ; et
- si la valeur de comptage est inférieure à la première valeur de référence, modifier la valeur de comptage en la première valeur de référence.

Selon un mode de réalisation, le circuit de protection est configuré en outre pour comparer une valeur courante d'un compteur matériel, cadencé par une horloge de référence, et une première valeur seuil afin de déterminer si la première durée est atteinte.

Selon un mode de réalisation, le circuit de protection est configuré pour être désactivé lorsque la première durée est atteinte.

Selon un mode de réalisation, le compteur monotone est configuré pour transmettre la valeur de comptage à un circuit de contrôle d'accès d'une mémoire, le circuit de contrôle d'accès étant configuré pour :
- autoriser la lecture, sur la base de la valeur de comptage, de premières données stockées dans la mémoire ; et
- ne pas autoriser la lecture des premières données sur la base de la première valeur de référence.

Selon un mode de réalisation, le circuit de contrôle d'accès est configuré en outre pour autoriser la lecture de deuxièmes données sur la base de la valeur de comptage.

### Brève description des dessins

Ces caractéristiques et avantages, ainsi que d'autres, seront exposés en détail dans la description suivante de modes de réalisation particuliers en relation avec les figures jointes parmi lesquelles :
la figure 1A représente, de façon schématique et sous forme de blocs, un mode de réalisation d'un dispositif de traitement selon un mode de réalisation de la présente description ;
la figure 1B représente de façon schématique un circuit de protection selon un mode de réalisation de la présente description ;
la figure 2 représente des données et codes accessibles lors d'un démarrage sécurisé selon un mode de réalisation de la présente description ;
la figure 3 est un organigramme représentant des opérations d'un procédé de démarrage sécurisé d'un dispositif de traitement selon un exemple de réalisation de la présente description couvert par l'invention ;
la figure 4A est un chronogramme représentant un exemple du déroulement d'un démarrage sécurisé d'un dispositif de traitement ;
la figure 4B est un chronogramme représentant un exemple du déroulement d'un démarrage sécurisé d'un dispositif de traitement selon un exemple de réalisation de la présente description ;
la figure 4C est un chronogramme représentant un autre exemple du déroulement d'un démarrage sécurisé d'un dispositif de traitement selon un exemple de réalisation de la présente description ;
la figure 4D est un chronogramme représentant un autre exemple du déroulement d'un démarrage sécurisé d'un dispositif de traitement selon un exemple de réalisation de la présente description ;
la figure 5 est un organigramme représentant des opérations d'un procédé de démarrage sécurisé d'un dispositif de traitement selon un exemple de réalisation de la présente description non couvert par l'invention ; et
la figure 6 est un organigramme représentant des opérations d'un procédé de démarrage sécurisé d'un dispositif de traitement selon un autre exemple de réalisation de la présente description non couvert par l'invention.

### Description des modes de réalisation

De mêmes éléments ont été désignés par de mêmes références dans les différentes figures. En particulier, les éléments structurels et/ou fonctionnels communs aux différents modes de réalisation peuvent présenter les mêmes références et peuvent disposer de propriétés structurelles, dimensionnelles et matérielles identiques.

Par souci de clarté, seuls les étapes et éléments utiles à la compréhension des modes de réalisation décrits ont été représentés et sont détaillés. En particulier, la conception de dispositifs de traitement est bien connue de la personne du métier et certains éléments n'ont pas été détaillés dans la description qui suit.

Sauf précision contraire, lorsque l'on fait référence à deux éléments connectés entre eux, cela signifie directement connectés sans éléments intermédiaires autres que des conducteurs, et lorsque l'on fait référence à deux éléments reliés (en anglais "coupled") entre eux, cela signifie que ces deux éléments peuvent être connectés ou être reliés par l'intermédiaire d'un ou plusieurs autres éléments.

Dans la description qui suit, lorsque l'on fait référence à des qualificatifs de position absolue, tels que les termes "avant", "arrière", "haut", "bas", "gauche", "droite", etc., ou relative, tels que les termes "dessus", "dessous", "supérieur", "inférieur", etc., ou à des qualificatifs d'orientation, tels que les termes "horizontal", "vertical", etc., il est fait référence sauf précision contraire à l'orientation des figures.

Sauf précision contraire, les expressions "environ", "approximativement", "sensiblement", et "de l'ordre de" signifient à 10 % près, de préférence à 5 % près.

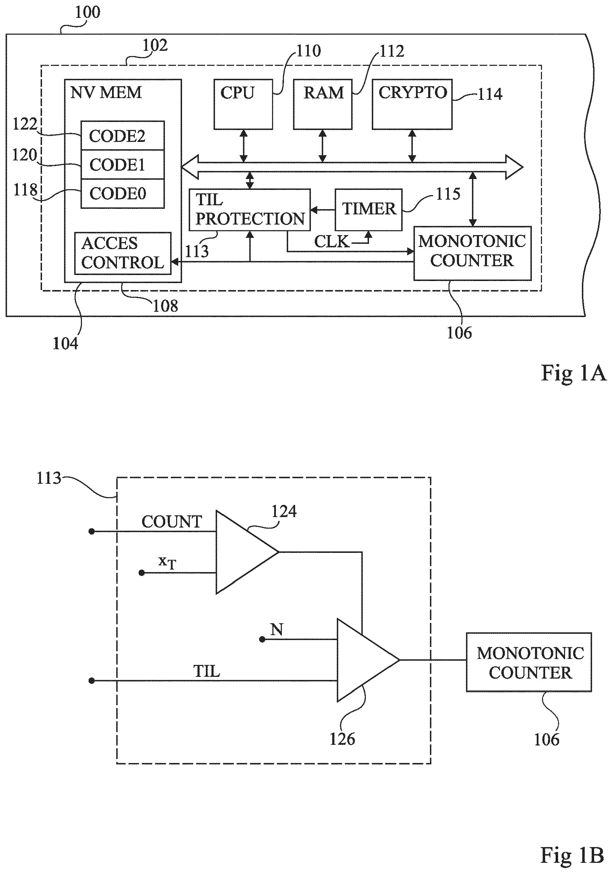

La figure 1A représente, de façon schématique et sous forme de blocs, un dispositif électronique 100 comprenant un dispositif de traitement 102 selon un mode de réalisation de la présente description.

Le dispositif électronique 100 est par exemple une carte électronique telle qu'une carte à microcircuits, un matériel à usage informatique, ou un circuit à microprocesseur ou à microcontrôleur.

Le dispositif de traitement 102 comprend par exemple une mémoire non volatile 104 (NV MEM), par exemple une mémoire flash. La mémoire 104 comprend, par exemple, une interface de contrôle d'accès 108 (ACCES CONTROL) reliée à un compteur monotone 106 (MONOTONIC COUNTER).

Les compteurs monotones sont connus dans l'état de la technique, un exemple d'un tel compteur étant décrit dans la publication "Virtual Monotonie Counters and Count-Limited Objects using a TPM without a Trusted OS" de L.F.G. Sarmenta, M. Van Dijk, C.W. O'Donnell, J. Rhodes et S. Devadas, et en particulier dans la partie 3 de ce document. Ce document décrit des réalisations de compteur mis en oeuvre sous forme matérielle et/ou en logicielle. Le compteur monotone 106 est par exemple mis en oeuvre de façon matérielle par un circuit numérique, tel qu'un circuit intégré personnalisé (ASIC, de l'anglais "Application Spécifie Integrated Circuit"). Le compteur monotone est configuré pour maintenir une valeur de comptage, accessible sur une sortie du compteur. Suite à une commande d'incrémentation, le compteur monotone 106 augmente d'une ou plusieurs unités sa valeur de comptage mais, suite à chaque incrémentation, l'opération n'est pas réversible. En effet, le compteur monotone 106 est configuré pour que sa valeur de comptage ne décroisse jamais. De plus, entre deux incrémentations, la valeur de comptage est par exemple protégée contre toute diminution. Seule la commande d'incrémentation ou une commande de modification permet le remplacement de la valeur actuelle par une nouvelle valeur supérieure à la valeur actuelle.

Le compteur monotone 106 est configuré de sorte qu'aucune commande, mise à part une remise à zéro du dispositif de traitement 102, ne permette de revenir à la valeur de comptage précédente. Dans le cas où la valeur de comptage est stockée de manière volatile, chaque mise hors alimentation du dispositif de traitement 102 engendre la perte de la valeur de comptage et à chaque remise sous tension du dispositif, le compteur monotone 106 génère à nouveau une valeur de comptage initiale. Dans le cas où la valeur de comptage est stockée dans un élément de mémorisation non volatile, à chaque redémarrage, une valeur de comptage initiale est par exemple réécrite dans l'élément de mémorisation non volatile du compteur monotone 106. La valeur de comptage est par exemple stockée dans un registre (non représenté) du compteur monotone 106.

Le compteur monotone 106 est, en outre, couplé à un circuit de protection 113 (TIL PROTECTION). Par exemple, le circuit de protection 113 implémente une fonction de chien de garde (de l'anglais « watchdog »). Les fonctions de chiens de garde sont connues dans l'état de la technique et sont utilisées, par exemple, pour s'assurer qu'un circuit de traitement ne reste pas bloqué à une étape particulière du traitement qu'il effectue. Dans les modes de réalisation de la présente description, la fonction de chien de garde est employée afin de réduire le risque que le compteur monotone 106 reste bloqué à une valeur de comptage donnée. Le circuit de protection 113 est par exemple relié à un compteur 115 (TIMER). Le compteur 115 contient une valeur courante incrémentée par un signal d'horloge CLK. Le signal CLK est généré par exemple par un générateur d'horloge (non représentée) du dispositif 102, tel qu'un oscillateur quartz.

Le dispositif de traitement 102 comprend en outre un processeur générique 110 (CPU). Par exemple, le processeur générique 110 est couplé par l'intermédiaire d'un bus 116 au compteur monotone 106 ainsi qu'à une mémoire RAM (mémoire à accès aléatoire) 112 et à la mémoire non volatile 104. La mémoire 112 et/ou la mémoire 104 mémorisent par exemple des instructions pour contrôler le processeur 110. Le processeur générique 110 est en outre couplé par l'intermédiaire du bus 116 à un processeur cryptographique 114 (CRYPTO). Le processeur cryptographique 114 reçoit, par l'intermédiaire du bus 116, des données chiffrées et retourne les données déchiffrées et/ou reçoit, par l'intermédiaire du bus 116, des données non chiffrées et retourne les données chiffrées.

La mémoire non volatile 104 stocke par exemple plusieurs codes de démarrage, et/ou d'autres données, qui sont associés à plusieurs niveaux d'isolement TIL (de l'anglais "temporal isolation level"). Les codes de démarrage sont par exemple des codes logiciels et/ou micrologiciels. Dans l'exemple de la figure 1A, la mémoire non volatile 104 comprend une première zone 118 dans laquelle sont stockés un premier code de démarrage et/ou des premières données (CODE0). La mémoire 104 comprend en outre une deuxième zone 120, dans laquelle sont stockés un deuxième code de démarrage et/ou des deuxièmes données (CODE1), ainsi qu'une troisième zone 122 dans laquelle sont stockés un troisième code de démarrage et/ou des troisièmes données (CODE2). Les premier, deuxième et troisième codes de démarrage et/ou données sont par exemple associés à trois niveaux d'isolement TIL correspondants. Bien que le cas de trois ensembles de données soit illustré dans la figure 1A, dans d'autres modes de réalisation, la mémoire non volatile 104 peut ne stocker que deux ensembles de données, ou plus de trois ensembles de données, dans des zones correspondantes. A titre d'exemple, les premières, deuxièmes et troisièmes données comprennent des premier, deuxième et troisième codes de démarrage.

Le niveau isolement TIL dépend de la valeur de comptage générée par le compteur monotone 106. Dans un exemple, la valeur TIL est égale à la valeur de comptage du compteur monotone 106, bien qu'il serait possible de modifier la valeur de comptage afin de générer la valeur TIL.

Lors d'un démarrage, la lecture des premier, deuxième et troisième codes et/ou données et/ou l'exécution des premier, deuxième et troisième codes de démarrage, sont effectuées par étapes, chaque étape étant associée à un niveau d'isolement correspondant. Le circuit de contrôle d'accès 108 de la mémoire 104 est configuré de sorte que la lecture de ces codes/données soit contrôlée en fonction du niveau d'isolement de l'étape. Les premières données et/ou le premier code sont par exemple associés au niveau d'isolement, ou valeur de TIL, 0 et le circuit de contrôle d'accès 108 est configuré pour que ces données et/ou code soient uniquement accessibles pour lecture lorsque la valeur de comptage TIL courante est égale à 0. Lorsque la valeur de comptage est incrémentée, par exemple suite à l'exécution du premier code, le circuit de contrôle d'accès 108 verrouille la zone 118, les premières données et/ou le premier code ne sont alors plus accessibles en lecture. Suite à une incrémentation, la valeur de comptage courante passe par exemple à 1 et les données et/ou les codes de démarrage associés au niveau d'isolement 1, par exemple le deuxième code de démarrage, sont exécutés.

Dans certains cas, le circuit de contrôle d'accès 108 est configuré pour permettre la lecture d'une ou plusieurs données associées à des niveaux d'isolement supérieurs à celui de la valeur TIL courante. Par exemple, dans certains modes de réalisation, plus le niveau d'isolement est bas, plus le niveau de protection est important. Le niveau d'isolement 0 est donc le niveau assurant le plus de protection, car les données correspondantes peuvent être lues uniquement lorsque la valeur de comptage est égale à 0. Ainsi, chaque niveau d'isolement correspond à un niveau de protection du contenu des zones mémoire lui étant associé.

Le mécanisme de contrôle d'accès implémenté par le circuit 108 peut être mis en oeuvre de plusieurs manières.

Dans un premier exemple, quand le circuit 108 reçoit une demande de lecture associée à une ou plusieurs adresses dans la mémoire 104, il est configuré pour comparer cette/ces adresse (s) aux plages d'adresses associées aux zones 118, 120, 122 de la mémoire 104. S'il s'agit d'une adresse dans une zone associée à une valeur de TIL inférieure à la valeur courante, le circuit 108 est par exemple configuré pour bloquer l'opération de lecture.

Dans un deuxième exemple, le circuit 108 est configuré pour désactiver un circuit de lecture de toute zone 118, 120, 122 de la mémoire 104 associée à une valeur de TIL inférieure à la valeur courante. Par exemple, une ou plusieurs portes logiques, telles que des portes OU ou des portes ET, sont couplées dans le chemin de sortie de chaque zone 118, 120 et 122 de la mémoire 104 et reçoivent également un signal d'activation généré sur la base de la valeur de TIL permettant de désactiver sélectivement chaque chemin de sortie.

Le fait que la valeur de comptage ne puisse pas être décrémentée lors de la période de fonctionnement du dispositif 100 permet la protection des codes de démarrage une fois leur exécution faite, car le circuit de contrôle d'accès 108 empêche la lecture des données et/ou l'exécution des codes associés à des niveaux d'isolement TIL inférieurs au niveau courant.

Dans certains modes de réalisation, une ou plusieurs des données et/ou codes de démarrage et les niveaux d'isolement associés sont réservés à des phases de paramétrisation du dispositif 102 ou à des entités distinctes dans la chaîne allant du fabriquant jusqu'à l'utilisateur final. Par exemple, une entité intermédiaire entre le fabriquant du dispositif de traitement 102 et l'utilisateur final du dispositif électronique 100 peut être amenée à installer des données et/ou codes de démarrage qui sont propres à l'utilisation du dispositif 100. Dans ce cas, une ou plusieurs des données et/ou codes de démarrage les plus « bas », par exemple associés au niveau d'isolement 0, sont par exemple réservés au fabricant du dispositif de traitement 102, et d'autres données et/ou codes de démarrage sont réservés à l'entité intermédiaire.

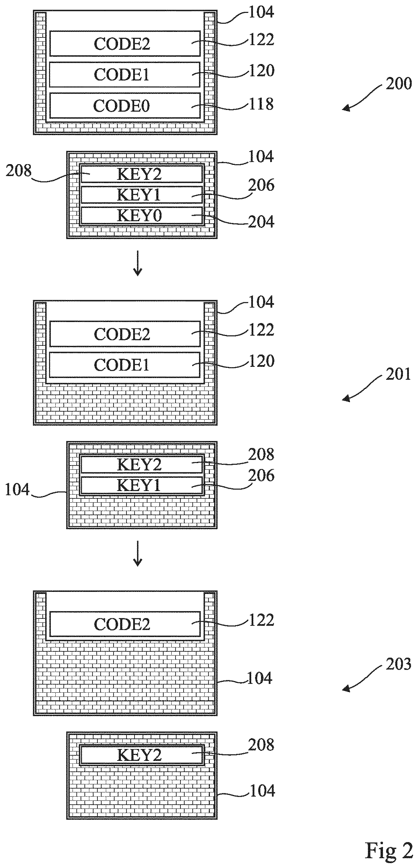

Le contenu des zones mémoire 118, 120 et 122 comprend, dans certains modes de réalisation, d'autres données en plus des codes de démarrage du dispositif de traitement 102. Par exemple, d'autres données sensibles en termes de confidentialité sont stockées en association avec au moins un des premier, deuxième et troisième codes et/ou données. Par exemple, ces autres données comprennent des clefs de chiffrement utilisées lors de l'exécution des codes de démarrage leur étant associés. Dans l'exemple de la figure 2, des zones mémoire 204, 206 et 208 stockent des données sensibles associées respectivement aux codes de démarrage 118, 120 et 122 stockés dans la mémoire non volatile 104. Les zones 204, 206 et 208 sont par exemple des zones distinctes des zones 118, 120 et 122, mais restent associées à un niveau d'isolement correspondant à celui des codes de démarrage auxquels les données sont liées. Ces données sensibles incluent par exemple une ou plusieurs clefs de chiffrement stockées dans chaque zone 204, 206 et 208 et chacune de ces zones est contenue dans la mémoire non volatile 104. Selon un autre mode de réalisation, chaque zone 204, 206 et 208 est une sous-zone de la zone correspondante 118, 120 et 122.

Bien que les protections assurées par le compteur monotone 106 et le circuit de contrôle d'accès 108 permettent de sécuriser la séquence de démarrage dans la plupart des cas, il reste un risque d'attaque par signaux transitoires (en anglais « glitch attack »), décrit plus en détail ci-dessous.

Par exemple, si une attaque en « glitch » est menée lorsque la valeur de TIL est égale à 0, il risque d'être possible de figer la valeur de TIL à ce niveau, et l'attaquant aurait donc accès aux données et/ou codes associés à la valeur de TIL 0 à tout moment de la vie du dispositif 100.

Pour contrer ce type d'attaque, à chaque démarrage du dispositif 102, le circuit de protection 113 est par exemple configuré pour forcer automatiquement la valeur de TIL à être égale à une valeur donnée après une durée prédéterminée après le début de la séquence de démarrage.

La figure 1B représente de façon schématique un mode de réalisation du circuit de protection 113 du dispositif électronique 100 de la figure 1A selon un mode de réalisation de la présente description.

A titre d'exemple, le circuit de protection 113 comprend des comparateurs 124 et 126. Le comparateur 124 reçoit un signal correspondant à une valeur courante COUNT de la valeur de comptage générée par le compteur 115 et la compare à une valeur seuil xT. La valeur seuil xT représente par exemple une durée de référence. Cette comparaison s'effectue par exemple de façon continue, ou à chaque cycle de l'horloge, jusqu'à ce que la valeur COUNT soit supérieure ou égale à la valeur xT. Lorsque la valeur COUNT est supérieure ou égale à xT, une comparaison par le comparateur 126 est par exemple déclenchée. Le comparateur 126 compare la valeur de TIL courante du compteur monotone 106 avec une valeur de référence N. La valeur de référence N correspond à la valeur de TIL qui devrait être courante suite à la durée de référence, correspondant à xT, après le début d'une séquence de démarrage.

Si la valeur de TIL reçue par le comparateur 126 au moment de la comparaison est strictement inférieure à la valeur de référence N, le comparateur 126 transmet un signal au compteur monotone 106 déclenchant, par exemple, une ou plusieurs incrémentations du compteur monotone 106, afin que la valeur de TIL devienne égale au moins à la valeur de référence N. La valeur de référence N est alors transmise au circuit de contrôle d'accès 108, ce qui a pour conséquence d'interdire l'accès aux données de la mémoire associées à des valeurs de TIL inférieures à N.

Selon un autre mode de réalisation, le comparateur 126 envoie la valeur de référence N au compteur monotone 106 afin de forcer le changement de la valeur de TIL vers cette valeur de référence N. Afin d'éviter l'écrasement de la valeur de comptage par une valeur inférieure, le compteur monotone 106 est par exemple configuré pour interdire l'écrasement de sa valeur courante par une valeur inférieure.

La figure 2 représente un exemple des données et codes accessibles lors d'un démarrage sécurisé du dispositif de traitement 102 de la figure 1A selon un mode de réalisation de la présente description.

Lors d'une première étape 200 de démarrage du dispositif de traitement 102 illustrée en haut de la figure 2, la valeur de comptage courante est par exemple égale à 0. Dans l'exemple de la figure 2, un niveau d'isolement 0 est associé à un premier code (CODE0) ainsi qu'à des premières données sensibles (KEY0). Le circuit de contrôle d'accès 108 est configuré, par exemple, pour que ce premier code et ces premières données soient exclusivement accessibles lorsque la valeur de comptage courante est égale à 0. Cependant, lors de l'étape 200, le circuit de contrôle d'accès autorise par exemple l'accès à toutes les zones mémoire 204, 206 et 208, ainsi qu'à toutes les zones 118, 120 et 122. En effet, dans certains cas, afin par exemple d'anticiper des étapes suivantes dans le procédé de démarrage, un ou plusieurs des autres codes de démarrage CODE1, CODE2 sont accessibles à la lecture pendant l'étape 200.

Par exemple, une fois que le premier code (CODE0) est exécuté, le processeur générique 110 commande une première incrémentation de la valeur de comptage courante par le compteur monotone 106. Par exemple, le premier code comprend une commande demandant l'incrémentation du compteur. Cette commande est par exemple transmise vers un registre de commande (non illustré) du compteur monotone 106.

Après cette première incrémentation, la valeur de comptage courante du compteur monotone 106 est par exemple égale à 1, correspondant à la deuxième étape 201 du démarrage. Le circuit de contrôle d'accès 108 reçoit la nouvelle valeur de comptage courante, et est configuré pour empêcher, sur la base de cette valeur de comptage supérieure à 0, tout accès au premier code ainsi qu'aux premières données qui sont associées au niveau d'isolation 0. Autrement dit, les zones mémoires 118 et 204 sont verrouillées sur la base de toute valeur de comptage strictement supérieure à 0.

Le niveau d'isolation 1 est associé à un deuxième code (CODE1) contenu dans la zone 120 ainsi qu'à des deuxièmes données (KEY1) contenues dans la zone 202. Selon un mode de réalisation, le troisième code (CODE2), par exemple associé au niveau d'isolation 2 et contenu dans la zone 122, est accessible pour lecture sur la base de la valeur de comptage courante égale à 1.

Par exemple, une fois que le deuxième code (CODE1) est exécuté, le processeur générique 110 commande une deuxième incrémentation de la valeur de comptage courante par le compteur monotone 106. Par exemple, après cette deuxième incrémentation, la valeur de comptage courante du compteur monotone 106 est égale à 2, correspondant à la troisième étape 203 du démarrage. Le niveau d'isolation 2 est associé au troisième code (CODE2) ainsi qu'à des troisièmes données (KEY2). Le circuit de contrôle d'accès 108 reçoit la nouvelle valeur de comptage, et est configuré pour empêcher, sur la base de cette valeur de comptage supérieure à 1, tout accès au premier et au deuxième codes ainsi qu'aux premières et aux deuxièmes données qui sont associés aux niveaux d'isolation inférieurs ou égaux à 1.

Selon un mode de réalisation, lorsque le dernier code de démarrage est exécuté, par exemple le troisième code de démarrage, le processeur générique 110 commande une troisième incrémentation de la valeur de comptage courante par le compteur monotone 106. Le circuit de contrôle d'accès 108 verrouille alors tout accès aux premier, deuxième et troisième codes de démarrage ainsi qu'aux premières, deuxièmes et troisièmes données.

Selon un autre mode de réalisation, lorsque le dernier code de démarrage est exécuté, par exemple le troisième code de démarrage, la valeur de comptage courante n'est pas incrémentée par le compteur monotone 106 et l'accès au troisième code de démarrage ainsi qu'aux troisièmes données reste autorisé par le circuit de contrôle d'accès.

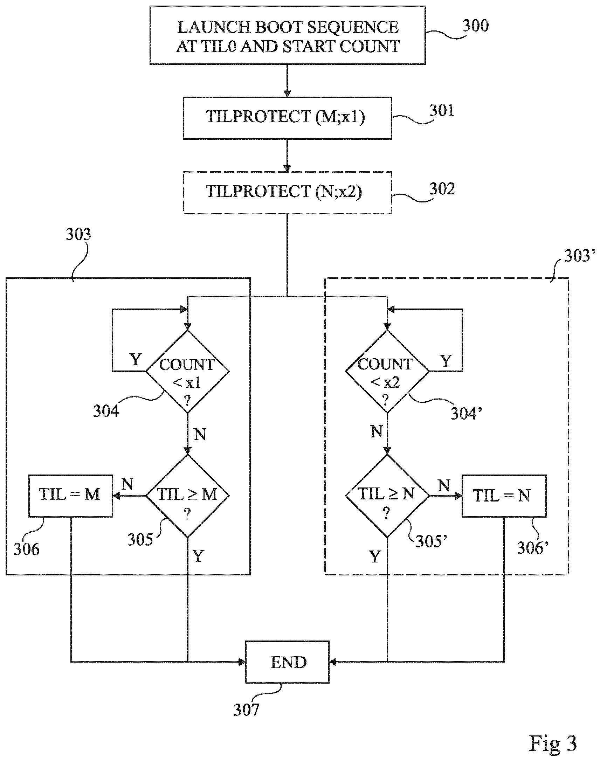

La figure 3 est un organigramme représentant des opérations d'un procédé de démarrage sécurisé du dispositif de traitement 102 selon un exemple de réalisation de la présente description selon l'invention.

Dans une étape 300 (LAUNCH BOOT SEQUENCE AT TIL0 AND START COUNT), le dispositif 102 est réinitialisé et une séquence de démarrage débute. Le compteur monotone 106 génère alors une première valeur de TIL, par exemple égale à 0. Le compteur 115 est initialisé et une valeur courante COUNT du compteur 115 est incrémentée à chaque cycle de l'horloge du dispositif 102.

Dans certains cas, dans une opération 301 (TILPROTECT(M;x1)), le circuit de protection 113 est configuré pour déclencher l'incrémentation de la valeur de TIL à la valeur M, une durée x1 après le début de la séquence de démarrage. Par exemple, cette opération 301 comprend la configuration d'une valeur de référence M et d'une valeur seuil x1 dans un registre. Dans d'autres modes de réalisation, ces valeurs sont invariables et stockées de façon non volatile dans une mémoire du dispositif 100.

De manière facultative, dans une opération 302 (TILPROTECT(N;x2)), le circuit de protection 113 peut aussi être configuré pour déclencher l'incrémentation de la valeur de TIL à la valeur N, une durée x2 après le début de la séquence de démarrage. Comme pour l'opération 301, cette opération 302 comprend par exemple la configuration d'une valeur de référence N et d'une valeur seuil x2 dans un registre. Dans d'autres modes de réalisation, ces valeurs sont invariables et stockées de façon non volatile dans une mémoire du dispositif 100.

Les procédés de protection sur la base d'une ou plusieurs durées xT sont par exemple implémentés en parallèle, la figure 3 illustrant un exemple d'un premier procédé 303 basé sur la durée x1, et d'un deuxième procédé 303' basé sur la durée x2.

Le procédé 303 comprend des étapes 304 à 306.

Dans une étape 304 (COUNT<x1 ?), le comparateur 124 du circuit de protection 113 compare la valeur courante COUNT du compteur 115 avec la valeur x1. Si la valeur COUNT est strictement inférieure à la valeur x1 (branche Y), le procédé reprend sur cette même étape 304. Si la valeur COUNT est supérieure ou égale à la valeur x1 (branche N), le comparateur 126 compare la valeur de TIL courante du compteur monotone 106 avec la valeur M (bloc 305, TIL≥M). Si la valeur de TIL courante est supérieure ou égale à la valeur M, le procédé se termine dans une étape 307 (END). Dans le cas où la valeur de TIL courante est strictement inférieure à la valeur M, la valeur du TIL est forcée à la valeur M dans une opération 306. Par exemple, soit la valeur de comptage de compteur monotone 106 est incrémentée d'une ou plusieurs unités jusqu'à ce que la valeur de TIL soit égale à la valeur M, soit la valeur de TIL courante est écrasée du registre du compteur monotone 106 par la valeur M. Après l'opération 303, le procédé se termine dans l'étape 307 (END).

Dans certains cas, seul le procédé 303 est implémenté. A titre d'exemple, dans un usage normal, c'est-à-dire sans attaque en « glitch », la valeur de TIL 2 est par exemple atteinte en moins de 5 microsecondes suite au lancement de la séquence de démarrage. Le circuit de protection 113 est alors uniquement configuré pour déclencher automatiquement l'incrémentation de la valeur de TIL à la valeur 2, 5 microsecondes après le début de la séquence de démarrage. Dans le cas où la valeur de TIL est déjà égale à 2, le circuit de protection 113 est par exemple désactivé.

Dans le cas où le procédé 303' est également implémenté, en parallèle du procédé 303, le procédé 303' comprend des opérations 304', 305' et 306' similaires aux opérations 304, 305 et 306, sauf que la valeur seuil x1 est remplacée par la valeur seuil x2 dans l'opération 304', et la valeur de référence M est remplacée par la valeur de référence N dans les opérations 305' et 306'. Les comparaisons faites dans les opérations 304' et 305' sont par exemple implémentées par un autre circuit similaire à celui de la figure 1B.

A titre d'exemple, dans le cas où les procédés 303 et 303' sont implémentés, le circuit de protection est alors configuré pour déclencher automatiquement l'incrémentation de la valeur de TIL à la valeur 2, par exemple 5 microsecondes après le début de la séquence de démarrage, et en parallèle pour déclencher automatiquement l'incrémentation de la valeur de TIL à la valeur 3, par exemple 10 microsecondes après le début de la séquence de démarrage. Le circuit de protection 113 est par exemple désactivé dès lors que la valeur de TIL courante est égale à 3.

Il est possible de protéger une pluralité de niveaux de TIL en réalisant une pluralité d'étapes similaires aux étapes 304 à 306 et aux étapes 304' à 306' avec des valeurs de références différentes des valeurs M et N associées à des valeurs différentes de x1 et de x2.

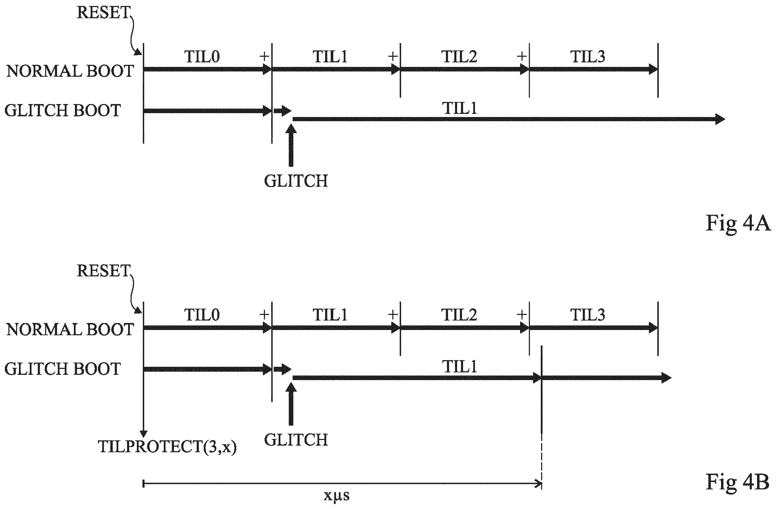

Les figures 4A à 4D sont des chronogrammes illustrant un exemple du déroulement d'un démarrage sécurisé du dispositif de traitement 102.

Les figures 4A à 4D représentent chacune deux lignes temporelles représentant le déroulement d'un démarrage à partir de l'initialisation (RESET) du dispositif 102. La ligne supérieure (NORMAL BOOT) des figures 4A à 4D correspond au lancement d'une séquence de démarrage en l'absence d'une attaque en « glitch ». La valeur initiale de TIL est 0, et cette valeur est incrémentée trois fois lors de la séquence de démarrage.

Dans l'exemple des figures 4A à 4D, durant un démarrage sans attaque en « glitch », la valeur de TIL 1 est atteinte en moins de y microsecondes et la valeur de TIL 3 est atteinte en moins de x microseconde.

Les lignes inférieures des figures 4A à 4D représentent chacune un exemple d'un démarrage du dispositif 102 en présence d'une attaque en « glitch » (GLITCH BOOT).

La ligne inférieure de la figure 4A représente un exemple de démarrage du dispositif 102 subissant une attaque en « glitch » (GLITCH) lorsque la valeur de TIL est égale à 1. Dans cet exemple, l'incrémentation (+) des valeurs de TIL n'est plus appliquée après l'arrivée du « glitch », et la valeur de TIL reste donc figée à 1. La séquence de démarrage s'effectue alors tout en gardant pour valeur de TIL 1. L'attaquant a alors accès aux données associées à la valeur de TIL 1 même lorsque la séquence de démarrage est finie.

La ligne inférieure de la figure 4B représente un exemple de démarrage du dispositif 100 illustrant un mode de mise en oeuvre du procédé décrit. Dans cet exemple, le circuit de protection 113 est configuré (TILPROTECT(3,x)) pour forcer la valeur de TIL à être égale à 3 suite à une durée de x microsecondes après le début de la séquence de démarrage. Dans cet exemple, une attaque en « glitch » a lieu lorsque la valeur de TIL vaut 1. La séquence de démarrage continue et la valeur de TIL n'est pas incrémentée à la valeur 2. Une durée de x microsecondes après le début de la séquence de démarrage, le circuit de protection 113 force la valeur de TIL à être égale à la valeur 3. Les données et/ou codes associés aux valeurs de TIL 1 et 2 ne sont alors plus accessibles par l'attaquant.

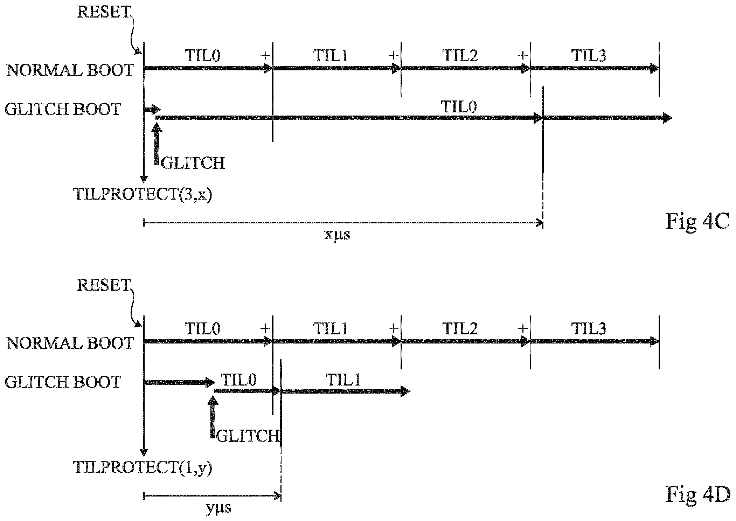

La ligne inférieure de la figure 4C représente un exemple de démarrage du dispositif de traitement 102 similaire à celui de la figure 4B. Dans l'exemple de la figure 4C, le circuit de protection 113 est configuré de la même manière qu'en figure 4B. Dans l'exemple de la figure 4C une attaque en « glitch » (GLITCH) est menée lorsque la valeur de TIL vaut encore 0. Les valeurs de TIL 1 et 2 n'étant pas protégée, la séquence de démarrage continue, tout en gardant pour valeur de TIL 0. Une durée de x microseconde après le début de la séquence de démarrage, le circuit de protection 113 force la valeur de TIL à être égale à 3. Les données et/ou codes associés aux valeurs de TIL 0, 1 et 2 ne sont alors plus accessibles par l'attaquant.

La ligne inférieure de la figure 4D représente un exemple de démarrage du dispositif de traitement 102 pour lequel le circuit de protection 113 est configuré (TILPROTECT(1,y)) pour forcer la valeur de TIL à être égale à 1 suite à une durée de y microsecondes après le début de la séquence de démarrage. Dans l'exemple de la figure 4D, une attaque en « glitch » (GLITCH) est menée lorsque la valeur de TIL vaut encore 0. Cependant, l'incrémentation de la valeur de TIL à la valeur 1 est assurée par le circuit de protection 113, suite à une durée de y microsecondes après le début de la séquence de démarrage.

Dans l'exemple de la figure 4D, il est possible d'ajouter la protection mise en oeuvre dans les figures 4B et 4C pour s'assurer qu'en fin de la séquence de démarrage, la valeur de TIL soit bien égale à 3.

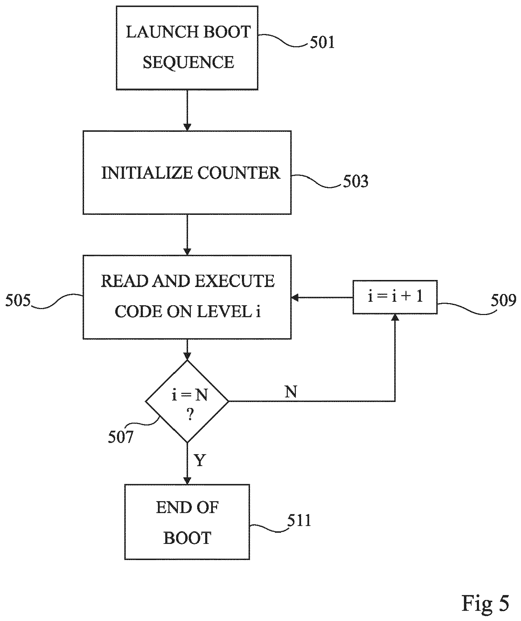

La figure 5 est un organigramme représentant des opérations d'un procédé de démarrage sécurisé d'un dispositif de traitement 102 selon un exemple de réalisation de la présente description non couvert par l'invention. Ce procédé est mis en oeuvre par exemple par le processeur générique 110, le compteur monotone 106 et le circuit de contrôle d'accès 108, du dispositif de traitement 102 de la figure 1A.

Dans une étape 501 (LAUNCH BOOT SEQUENCE) le dispositif de traitement 102 démarre. Dans un exemple il s'agit du premier démarrage du dispositif 102 après sa production. Dans un autre exemple il s'agit d'un démarrage effectué par une entité intermédiaire entre le fabriquant du dispositif 102 et son utilisateur final. Encore dans un autre exemple, il s'agit d'un démarrage dit de fonctionnement du dispositif électronique 100 effectué par l'utilisateur final.

Dans une étape 503 (INITIALIZE COUNTER), postérieure à l'étape 501, le compteur monotone 106 est initialisé à une valeur initiale, étant un entier naturel. Dans l'exemple dans lequel la valeur de comptage est stockée de manière volatile, chaque mise sous tension du dispositif de traitement 102 engendre l'initialisation de la valeur de comptage, par exemple à 0 ou à 1. Dans un autre exemple dans lequel la valeur de comptage est stockée sur des éléments de mémorisation non volatile, chaque mise sous tension du dispositif de traitement 102 engendre le remplacement de la valeur de comptage courante par la valeur de comptage initiale, par exemple égale à 0 ou à 1.

Dans certains modes de réalisation, la valeur de comptage initiale générée suite à une mise sous tension peut varier selon l'état, ou contexte, du dispositif de traitement 102. Par exemple, une ou plusieurs valeurs de comptage correspondent à un ou plusieurs niveaux d'isolation réservés à une phase de paramétrisation initiale du dispositif 102, comprenant par exemple l'installation de micrologiciels. Les données et/ou codes associés à ces niveaux d'isolement sont par exemple utilisés pour cette paramétrisation initiale.

Par exemple, suite à la fabrication, le dispositif de traitement 102 a le contexte "vierge" et la valeur de comptage initiale est égale à une valeur réservée à la paramétrisation, telle que 0. Une fois la paramétrisation achevée, le contexte du dispositif devient par exemple "paramétrisation achevée". Avec ce nouveau contexte, la mise sous tension du dispositif 102, effectuée par exemple par une entité intermédiaire entre le fabriquant et l'utilisateur final et/ou par l'utilisateur final, déclenchera alors une valeur de comptage supérieure à la valeur de comptage réservée, et par exemple égale à 1. Le ou les codes de démarrage, ainsi que les données sensibles, associés au niveau d'isolement correspondant à la valeur de comptage réservée seront, par conséquent, inaccessibles.

Par exemple, le contexte du dispositif est détecté par la présence d'une tension sur une broche de démarrage du dispositif, cette tension étant appliquée par exemple par l'ajout d'un cavalier (en anglais "jumper") entre la broche de démarrage et une autre broche à une tension d'alimentation. A titre complémentaire ou alternatif, le contexte du dispositif est détecté par la valeur d'un ou plusieurs bits stockés de façon non volatile, et de manière protégée, dans la mémoire 104, ou dans une autre mémoire.

Dans un exemple, le processeur générique 110 est agencé pour détecter le contexte du dispositif 102 lors de la mise sous tension du dispositif 102, et pour configurer en conséquence la valeur de comptage initiale du compteur monotone 106. Dans un autre exemple, le compteur monotone 106 est agencé pour détecter lui-même le contexte du dispositif 102 et pour configurer lui-même sa valeur de comptage initiale, lors de la mise sous tension du dispositif 102.

Dans une étape 505 (READ AND EXECUTE CODE ON LEVEL i), postérieure à l'étape 503, les données et les codes de démarrage associés au niveau d'isolement i sont lus par le processeur générique 110 et les codes de démarrage associés au niveau d'isolement i sont exécutés. Une fois les codes du niveau i exécutés, le processeur générique 110 compare, dans une étape 507 (i=N ?) la valeur de comptage i à la valeur N, N étant la valeur de comptage associée à la dernière étape dans la séquence de démarrage, autrement dit les codes de démarrage du niveau d'isolement N sont les derniers à être exécutés selon le mode de réalisation de la présente description. Par exemple, dans l'exemple de la figure 2, N est égale à 2. Si i n'est pas égal à N (branche N), le procédé continue dans une étape 509 (i=i+1) dans laquelle le processeur générique 110 déclenche l'incrémentation de la valeur de comptage. Par exemple, la valeur de comptage passe de i à i+1. Il est également possible que l'incrémentation augmente la valeur de comptage de plusieurs unités. Le procédé reprend alors à l'étape 505.

Dans le cas où, suite à l'étape de comparaison 507, la valeur de comptage est égale à N (branche Y), le procédé se termine sur une étape 511 (END OF BOOT) dans laquelle le démarrage du dispositif de traitement 102 se termine. Selon un mode de réalisation, la valeur de comptage courante reste égale à N suite à l'étape 511. Selon un autre mode de réalisation, la valeur de comptage est incrémentée lors de l'étape 511, et la valeur de comptage courante devient égale à N+1. Dans ce deuxième cas, le circuit de contrôle d'accès est alors configuré pour empêcher tout accès à tous les codes de démarrage sur la base de cette valeur de comptage.

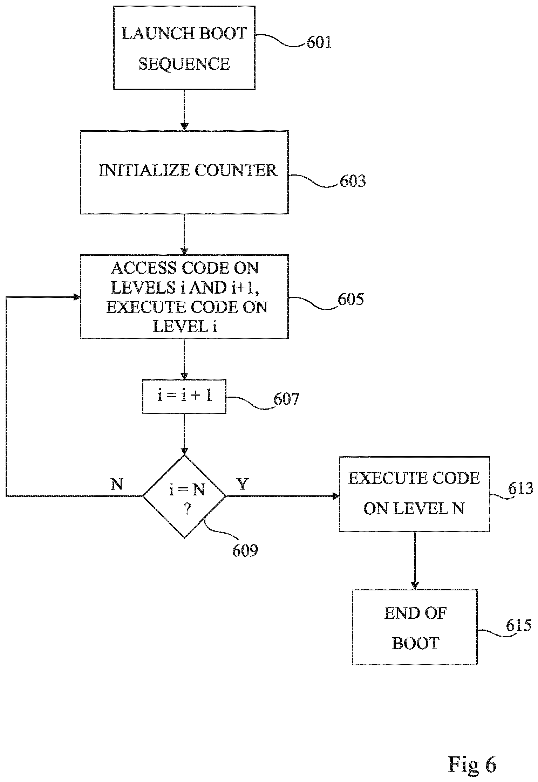

La figure 6 est un organigramme représentant des opérations d'un procédé de démarrage sécurisé d'un dispositif de traitement 102 selon un autre exemple de réalisation de la présente description non couvert par l'invention. Ce procédé est mis en oeuvre par exemple par le processeur générique 110, le compteur monotone 106 et le circuit de contrôle d'accès 108, du dispositif de traitement 102 de la figure 1A.

Les étapes 601 et 603 sont similaires aux étapes 501 et 503 de la figure 5, et ne vont pas être décrites à nouveau en détail.

Dans une étape 605 (ACCESS CODE ON LEVELS i AND i+1, EXECUTE CODE ON LEVEL i), postérieure à l'étape 603, les données et les codes de démarrage associés aux niveaux d'isolement i+1 sont accessibles par le processeur générique 110 et le ou les codes de démarrage associés au niveau d'isolement i sont exécutés.

Dans un exemple, les données ou codes associés au niveau d'isolement i contiennent une ou plusieurs clefs de chiffrement, chiffrées ou non, qui seront utilisées lors de l'exécution d'un ou plusieurs codes associés au niveau d'isolement i+1. Ainsi, un accès pour écriture est par exemple autorisé sur la ou les zones mémoire associées au niveau d'isolement i+1 afin de provisionner les clefs aux codes associés au niveau d'isolement i+1.

Dans un autre exemple, les codes associés au niveau d'isolement i contiennent des instructions visant à vérifier l'intégrité des données et/ou codes associés au niveau d'isolement i+1. Ainsi, un accès en lecture de la ou des zones mémoire associées au niveau d'isolement i+1 est autorisé afin d'effectuer cette vérification.

Dans une étape 607 (i=i+1), postérieure à l'étape 605, la valeur de comptage est incrémentée. Par exemple la valeur de comptage passe de i à i+1. Dans d'autres exemples, l'incrémentation augmente i de plusieurs unités.

Dans une étape 609 (i=N ?) le processeur générique 110 compare la valeur de comptage i à la valeur N, où N est défini comme décrit en relation avec l'étape 607 de la figure 3. Si la valeur i n'est pas égale à N (branche N) le procédé revient à l'étape 605.

Dans le cas où, lors de l'étape de comparaison 609, la valeur de comptage est égale à N (branche Y), le procédé continue sur une étape 613 (EXECUTE CODE ON LEVEL N) dans laquelle le ou les codes de démarrage associés au niveau d'isolation N sont exécutés.

Le démarrage du dispositif de traitement 102 se termine par une étape 615 (END OF BOOT), qui est similaire à l'étape 511 de la figure 5, et n'est pas décrite à nouveau en détail.

Le procédé dont la mise en oeuvre est présentée par la figure 6 permet une lecture des codes de démarrage en décalé. En effet les codes de démarrage associés à un niveau d'isolement sont lus lorsque la valeur de comptage est inférieure à la valeur du niveau. Cela permet un gain de temps par rapport à la mise en oeuvre du procédé présenté dans la figure 5.

Un avantage des modes de réalisation décrits est que des codes de démarrage, ainsi que des données sensibles en termes de confidentialité, sont protégés de façon importante contre des attaques, et notamment des attaques en « glitch », par l'usage d'un compteur monotone et d'un circuit de protection tel que décrit dans la présente description.

Un autre avantage des modes de réalisation décrits est que les mécanismes de protection d'une séquence de démarrage sont assurés par des circuits matériels.

Divers modes de réalisation et variantes ont été décrits. La personne du métier comprendra que certaines caractéristiques de ces divers modes de réalisation et variantes pourraient être combinées, et d'autres variantes apparaîtront à la personne du métier. En particulier, le nombre de niveaux d'isolement ainsi que le nombre de protections des niveaux d'isolement peuvent varier. De plus, bien que des exemples de comparaisons ont été décrits sur la base de certains opérateurs tels que strictement inférieur ou supérieur ou égal, selon la définition des valeurs seuil ou de référence, les opérateurs peuvent varier.

Enfin, la mise en oeuvre pratique des modes de réalisation et variantes décrits est à la portée de la personne du métier à partir des indications fonctionnelles données ci-dessus.

## Revendications

1. Procédé comprenant :
- la protection d'une séquence de démarrage d'un dispositif de traitement (102) par des incrémentations d'une valeur de comptage (TIL) générée par un compteur monotone (106) ;
- une première durée (x) après le début de la séquence de démarrage (RESET), la comparaison, par le circuit de protection (113), entre la valeur de comptage et une première valeur de référence (M) ; et
- si la valeur de comptage est inférieure à la première valeur de référence, la modification, par le circuit de protection (113), de la valeur de comptage en la première valeur de référence.

2. Procédé selon la revendication 1, dans lequel la valeur de comptage (TIL) est stockée dans un registre du compteur monotone (106), la modification de la valeur de comptage en la première valeur de référence (M) consistant en l'écrasement de la valeur de comptage par la première valeur de référence dans ledit registre.

3. Procédé selon la revendication 1 ou 2, comprenant en outre la comparaison, par le circuit de protection (113), entre une valeur courante (COUNT) d'un compteur matériel (115) cadencé par une horloge de référence avec une valeur seuil (xT, x1) afin de déterminer si la première durée (x) est atteinte.

4. Procédé selon l'une quelconque des revendications 1 à 3, comprenant en outre la désactivation du circuit de protection (113) lorsque la première durée (x) est atteinte.

5. Procédé selon l'une quelconque des revendications 1 à 4, comprenant :
- après une deuxième durée (y), la comparaison, par le circuit de protection (113), entre la valeur de comptage (TIL) et une deuxième valeur de référence (x2) ; et
- si la valeur de comptage est inférieure à la deuxième valeur de référence (N), la modification, par le circuit de protection (113), de la valeur de comptage en la deuxième valeur de référence (N).

6. Procédé selon l'une quelconque des revendications 1 à 5, comprenant en outre la génération de la valeur de comptage (TIL) par le compteur monotone (106) lors d'une première phase de la séquence de démarrage.

7. Procédé selon l'une quelconque des revendications 1 à 6, comprenant :
- la transmission, par le compteur monotone (106), de la valeur de comptage (TIL) à un circuit de contrôle d'accès (108) d'une mémoire (104) ; et
- la lecture, sur la base de la valeur de comptage, de premières données (118) stockées dans la mémoire.

8. Procédé selon la revendication 7, dans lequel la lecture des premières données (118) est interdite par le circuit de contrôle d'accès (108) sur la base de la première valeur de référence (M).

9. Procédé selon la revendication 7 ou 8, dans lequel les premières données (118) comprennent des premiers codes de démarrage.

10. Procédé selon l'une quelconque des revendications 7 à 9, comprenant en outre la lecture, sur la base de la valeur de comptage (TIL), de deuxièmes données stockées dans la mémoire (120, 122).

11. Dispositif de traitement (102) comprenant :
- un compteur monotone (106) configuré pour protéger une séquence de démarrage du dispositif en incrémentant une valeur de comptage (TIL) ; et
- un circuit de protection (113) configuré pour :
- une première durée (x, y) après le début de la séquence de démarrage, comparer la valeur de comptage avec une première valeur de référence (M, N) ; et
- si la valeur de comptage est inférieure à la première valeur de référence, modifier la valeur de comptage en la première valeur de référence.

12. Dispositif de traitement (102) selon la revendication 11, dans lequel le circuit de protection (113) est configuré en outre pour comparer une valeur courante (COUNT) d'un compteur matériel (115), cadencé par une horloge de référence, et une première valeur seuil (xT, x1, x2) afin de déterminer si la première durée (x, y) est atteinte.

13. Dispositif de traitement (102) selon la revendication 11 ou 12, dans lequel le circuit de protection (113) est configuré pour être désactivé lorsque la première durée (x, y) est atteinte.

14. Dispositif de traitement (102) selon l'une quelconque des revendications 11 à 13, dans lequel :
- le compteur monotone (106) est configuré pour transmettre la valeur de comptage (TIL) à un circuit de contrôle d'accès (108) d'une mémoire (104), le circuit de contrôle d'accès étant configuré pour :
- autoriser la lecture, sur la base de la valeur de comptage, de premières données (118) stockées dans la mémoire ; et
- ne pas autoriser la lecture des premières données sur la base de la première valeur de référence (M, N).

15. Dispositif de traitement (102) selon la revendication 14, dans lequel le circuit de contrôle d'accès (108) est configuré en outre pour autoriser la lecture de deuxièmes données (120, 122) sur la base de la valeur de comptage (TIL) .

## Patentansprüche

1. Verfahren, das Folgendes aufweist:
- den Schutz einer Startsequenz eines Verarbeitungsgeräts (102) durch Anheben eines Zählerwerts (TIL), der durch einen gleichbleibenden Zähler (106) erzeugt wird;
- einen erster Zeitabschnitt (x) nach dem Beginn der Startsequenz (RESET), den Vergleich, durch die Schutzschaltung (113), zwischen dem Zählerwert und einem ersten Referenzwert (M); und
- falls der Zählerwert kleiner ist, als der erste Referenzwert, die Änderung, durch die Schutzschaltung (113), des Zählerwerts zu dem ersten Referenzwert.

2. Verfahren nach Anspruch 1, wobei der Zählerwert (TIL) in einem Register des gleichbleibenden Zählers (106) gespeichert wird, wobei die Änderung des Zählerwerts zu dem ersten Referenzwert (M) Überschreiben des Zählerwerts mit dem ersten Referenzwert in das Register aufweist.

3. Verfahren nach Anspruch 1 oder 2, das ferner den Vergleich aufweist, und zwar durch die Schutzschaltung (113), zwischen einem momentanen Wert (COUNT) eines Hardwarezählers (115), der durch einen Referenztakt eingestuft wird, und einem Schwellenwert (xT, x1) um zu bestimmen ob der erste Zeitabschnitt (x) erreicht wurde.

4. Verfahren nach einem der Ansprüche 1 bis 3, das ferner das Deaktivieren der Schutzschaltung (113) aufweist, wenn der erste Zeitabschnitt (x) erreicht wurde.

5. Verfahren nach einem der Ansprüche 1 bis 4, das Folgendes aufweist:
- nach einem zweiten Zeitabschnitt (y), den Vergleich, und zwar durch die Schutzschaltung (113), zwischen dem Zählerwert (TIL) und einem zweiten Referenzwert (x2); und
- falls der Zählerwert kleiner ist, als der zweite Referenzwert (N), die Änderung, und zwar durch die Schutzschaltung (113), des Zählerwerts zu dem zweiten Referenzwert (N).

6. Verfahren nach einem der Ansprüche 1 bis 5, das ferner das Erzeugen des Zählerwerts (TIL) aufweist, und zwar durch den gleichbleibenden Zähler (106) während einer ersten Phase der Startsequenz.

7. Verfahren nach einem der Ansprüche 1 bis 6, das Folgendes aufweist:
- die Übertragung, und zwar durch den gleichbleibenden Zähler (106), des Zählerwerts (TIL) an eine Schaltung zum Steuern des Zugriffs (108) auf einen Speicher (104); und
- das Lesen, und zwar auf der Basis des Zählerwerts, von ersten Daten (118), die in dem Speicher gespeichert sind.

8. Verfahren nach Anspruch 7, wobei das Lesen der ersten Daten (118) verboten wird, und zwar durch die Zugriffssteuerschaltung (108) auf der Basis des ersten Referenzwerts (M).

9. Verfahren nach Anspruch 7 oder 8, wobei die ersten Daten (118) erste Start-Codes aufweisen.

10. Verfahren nach einem der Ansprüche 7 bis 9, das ferner das Lesen aufweist, und zwar auf der Basis des Zählerwerts (TIL), von zweiten Daten, die in dem Speicher (120, 122) gespeichert sind.

11. Verarbeitungsgerät (102), das Folgendes aufweist:
- einen gleichbleibenden Zähler (106), der eingerichtet ist eine Startsequenz des Geräts zu schützen, und zwar durch Anheben eines Zählerwerts (TIL); und
- eine Schutzschaltung (113), die eingerichtet ist zum:
- einen ersten Zeitabschnitt (x, y) nach dem Beginn der Startsequenz, Vergleichen, zwischen dem Zählerwert und einem ersten Referenzwert (M, N); und
- falls der Zählerwert kleiner ist, als der erste Referenzwert, Ändern des Zählerwerts zu dem ersten Referenzwert.

12. Verarbeitungsgerät (102) nach Anspruch 11, wobei die Schutzschaltung (113) ferner eingerichtet ist zum Vergleichen zwischen einem momentanen Wert (COUNT) eines Hardwarezählers (115), der durch einen Referenztakt eingestuft wird, und einem ersten Schwellenwert (xT, x1, x2) um zu bestimmen ob der erste Zeitabschnitt (x, y) erreicht wurde.

13. Verarbeitungsgerät (102) nach Anspruch 11 oder 12, wobei die Schutzschaltung (113) eingerichtet ist, deaktiviert zu werden, wenn der ersten Zeitabschnitt (x, y) erreicht ist.

14. Verarbeitungsgerät (102) nach einem der Ansprüche 11 bis 13, wobei:
- der gleichbleibende Zähler (106) eingerichtet ist den Zählerwert (TIL) zu übertragen, und zwar an eine Schaltung zum Steuern des Zugriffs (108) auf einen Speicher (104), wobei die Zugriffssteuerschaltung eingerichtet ist zum:
- Autorisieren des Lesens, und zwar auf der Basis des Zählerwerts, von ersten Daten (118), die in dem Speicher gespeichert sind; und
- nicht Autorisieren des Lesens der ersten Daten auf der Basis des ersten Referenzwerts (M, N).

15. Verarbeitungsgerät (102) nach Anspruch 14, wobei die Zugriffssteuerschaltung (108) ferner eingerichtet ist zum Autorisieren des Lesens von zweiten Daten (120, 122) auf der Basis des Zählerwerts (TIL).

## Claims

1. Method comprising:
- the protection of a boot sequence of a processing device (102) by incrementations of a counting value (TIL) generated by a monotonic counter (106);
- a first time period (x) after the beginning of the boot sequence (RESET), the comparison, by the protection circuit (113), between the counting value and a first reference value (M); and
- if the counting value is smaller than the first reference value, the modification, by the protection circuit (113), of the counting value into the first reference value.

2. Method according to claim 1, wherein the counting value (TIL) is stored in a register of the monotonic counter (106), the modification of the counting value into the first reference value (M) comprising overwriting the counting value with the first reference value in said register.

3. Method according to claim 1 or 2, further comprising the comparison, by protection circuit (113), between a current value (COUNT) of a hardware counter (115) rated by a reference clock with a threshold value (xT, x1) to determine whether the first time period (x) has been reached.

4. Method according to any of claims 1 to 3, further comprising the deactivation of the protection circuit (113) when the first time period (x) is reached.

5. Method according to any of claims 1 to 4, comprising:
- after a second time period (y), the comparison, by the protection circuit (113), between the counting value (TIL) and a second reference value (x2); and
- if the counting value is smaller than the second reference value (N), the modification, by the protection circuit (113), of the counting value into the second reference value (N).

6. Method according to any of claims 1 to 5, further comprising the generation of the counting value (TIL) by the monotonic counter (106) during a first phase of the boot sequence.

7. Method according to any of claims 1 to 6, comprising:
- the transmission, by the monotonic counter (106), of the counting value (TIL) to a circuit for controlling the access (108) to a memory (104); and
- the reading, on the basis of the counting value, of first data (118) stored in the memory.

8. Method according to claim 7, wherein the reading of the first data (118) is forbidden by the access control circuit (108) on the basis of the first reference value (M) .

9. Method according to claim 7 or 8, wherein the first data (118) comprise first boot codes.

10. Method according to any of claims 7 to 9, further comprising the reading, on the basis of the counting value (TIL), of second data stored in the memory (120, 122) .

11. Processing device (102) comprising:
- a monotonic counter (106) configured to protect a boot sequence of the device by incrementing a counting value (TIL); and
- a protection circuit (113) configured to:
- a first time period (x, y) after the beginning of the boot sequence, compare the counting value with a first reference value (M, N); and
- if the counting value is smaller than the first reference value, modify the counting value into the first reference value.

12. Processing device (102) according to claim 11, wherein the protection circuit (113) is further configured to compare a current value (COUNT) of a hardware counter (115), rated by a reference clock, and a first threshold value (xT, x1, x2) to determine whether the first time period (x, y) is reached.

13. Processing device (102) according to claim 11 or 12, wherein the protection device (113) is configured to be deactivated when the first time period (x, y) has been reached.

14. Processing device (102) according to any of claims 11 to 13, wherein:
- the monotonic counter (106) is configured to transmit the counting value (TIL) to a circuit for controlling the access (108) to a memory (104), the access control circuit being configured to:
- authorize the reading, on the basis of the counting value, of first data (118) stored in the memory; and
- not authorize the reading of the first data on the basis of the first reference value (M, N).

15. Processing device (102) according to claim 14, wherein the access control circuit (108) is further configured to authorize the reading of second data (120, 122) on the basis of the counting value (TIL).
